# EUROPÄISCHE PATENTSCHRIFT

(11) **EP 0 683 333 B1**
(45) Veröffentlichungstag und Bekanntmachung des Hinweises auf die Patenterteilung: **01.10.1997**
(21) Anmeldenummer: 95106433.6
(22) Anmeldetag: 28.04.1995
(51) Int. Cl.: F16H 48/08, F16H 57/02

(54) **Differential für den Achsantrieb eines Kraftfahrzeuges**
Axle drive differential for motor vehicles
Différentiel pour l'entraînement de l'essieu d'un véhicule motorisé

(30) Priorität: 18.05.1994 DE 4417373
(43) Veröffentlichungstag der Anmeldung: 22.11.1995
(73) Patentinhaber: Dr.Ing.h.c. F. Porsche Aktiengesellschaft, 70435 Stuttgart (DE)
(72) Erfinder: Hoebel, Peter, D-75242 Neuhausen-Schellbronn (DE); Meffert, Peter, D-75233 Tiefenbronn (DE); Sander, Edmund, D-71229 Leonberg (DE)

(56) Entgegenhaltungen:
- DE-A- 1 810 520
- DE-A- 4 115 304
- DE-A- 4 313 322
- FR-A- 2 438 773
- US-A- 4 221 138
- PATENT ABSTRACTS OF JAPAN vol. 007 no. 254 (M-255) ,11.November 1983 & JP-A-58 137643 (NISSAN JIDOSHA KK) 16.August 1983,

## Beschreibung

Die Erfindung betrifft ein Differential für ein Kraftfahrzeug gemäß der Gattung des Patentanspruches 1.

Ein Differential für den Achsantrieb eines Kraftfahrzeuges, wie im Oberbegriff des Anspruches 1 angegeben, bei dem die Achswellenräder in einem Käfig gelagert sind, ist aus der DE-A-43 13 322 bekannt. Dieser Käfig nimmt die in Richtung der Achsantriebswellen wirkenden Kräfte auf. Damit ist das Ausgleichsgehäuse des Differentials von diesen Kräften freigestellt und kann entsprechend geringer dimensioniert werden. Dieser separate Käfig erlaubt das Einsetzen der Achswellenräder und des Achsbolzens, bevor das gesamte Differential montiert wird.

Der Erfindung liegt die Aufgabe zugrunde, ein derartiges Differential so weiterzubilden, daß der Käfig steifigkeitsoptimiert, leichtgewichtig, kostengünstig sowie einfach herzustellen und zu montieren ist. Diese Aufgabe wird erfindungsgemäß anhand der kennzeichnenden Merkmale des Hauptanspruches gelöst.

Wenn bei einem gattungsgemäßen Differential der Käfig aus einem Rohrabschnitt besteht, dessen Wandung mindestens zwei diametrale Bohrungen zur Durchführung der Achsantriebswellen aufweist, läßt sich dieser insbesondere in der Serienfertigung durch Teilen eines vorgefertigten oder handelsüblichen Rohres ohne große Materialverluste herstellen. Die Wandstärke eines derartigen Rohrabschnittes kann aufgrund des günstigen Spannungsverlaufes relativ gering gehalten werden, so daß der entsprechende Käfig relativ leicht ist. In diesen Rohrabschnitt sind in einem zusätzlichen oder parallelen Arbeitsschritt mindestens zwei diametrale Bohrungen zur Durchführung der Achsantriebswellen eingebracht. Ein Fügen bzw. Verbinden des Käfigs wie beim Käfig nach der nicht vorveröffentlichten DE-A-43 13 322 ist nicht erforderlich, so daß einerseits ein zusätzlicher Fertigungsschritt eingespart wird und andererseits eine Verbindungsstelle mit veränderter Festigkeit vermieden wird.

Das Differential bzw. dessen Käfig läßt sich in vorteilhafter Ausgestaltung verbessern, wenn letzterer aus einem zylindrischen Rohrabschnitt besteht, der durch einen Umformvorgang in eine kugelige Form gebracht wird. Dieser Umformvorgang wird vorteilhafterweise spanlos durch Aufweiten oder Einrollen durchgeführt. Durch diesen Umformvorgang wird der Spannungsverlauf im Käfig verbessert, da durch das Vermeiden von geringen Krümmungs- bzw. Eckradien Spannungsspitzen vermieden werden. Gleichzeitig wird die Lagerung der Achswellenräder verbessert, da diese sich in Form einer Kugelkalotte am Käfig abstützen können. Durch diese Form- bzw. Spannungsverlaufsverbesserung kann die Wandstärke des Käfigs noch einmal verringert werden, so daß eine weitere Gewichtsreduzierung möglich ist.

Insbesondere bei durchschnittlichen Antriebsleistungen und entsprechend geringen Antriebs- bzw. Reaktionskräften im Differential kann der Käfig noch einmal im Gewicht reduziert werden, wenn zwei weitere diametrale Bohrungen angebracht werden, die etwa rechtwinklig zu denen der Achsantriebswelle verlaufen und durch die der Achsbolzen geführt wird.

Für hohe Antriebsleistungen und entsprechend hohe Reaktionskräfte im Differential läßt sich dieses bzw. der Käfig in vorteilhafter Ausgestaltung verbessern, wenn letzterer einen Rechteckquerschnitt mit gerundeten Ecken und beanspruchungsspezifisch angepasster Wandstärke aufweist. Durch beanspruchungsspezifische bzw. spannungsoptimierte Wandstärken des Käfigs läßt sich dieser sowohl im Gewicht als auch in seiner Festigkeit optimieren. Die beanspruchungsspezifisch angepasste Wandstärke und das Abrunden der Ecken ergeben optimale Festigkeiten bzw. einen optimalen Spannungsverlauf bei Vermeidung von Spannungsspitzen. Ein derartiges Rechteckprofil bzw. quadratisches Rohrprofil läßt sich auf einfache und vorteilhafte Weise aus einem Strangpreßprofil herstellen.

Ein Käfig dieser Art mit rechteckigem bzw. quadratischem Querschnitt kann weiterhin verbessert werden, wenn die Wandungen mit den Bohrungen zur Führung der Achsantriebswellen im Einbauzustand nach innen vorgewölbt sind. Dadurch ergibt sich ein verbessertes, definiertes Tragverhalten und ein Federeffekt zur Lastspitzenminimierung. Darüber hinaus ergibt sich durch diese Vorwölbung nach innen bei geringen Lasten und entsprechend geringen Reaktionskräften bzw. Abstützkräften ein Schmierspaltaufbau, durch den Schmiermittel in den Bereich der Kegelradführung gelangen kann.

Die Montage bzw. der Zusammenbau des Differentials werden erleichtert, wenn der Achsbolzen von einem Führungsring umfaßt wird, der zwischen dem Ausgleichskegelrad und einer Anschlagfläche angeordnet ist und der Führungsfortsätze aufweist, die sich am Käfig abstützen und diesen und den Achsbolzen relativ zueinander führen. Durch diesen Führungsring wird einerseits eine Gleitfläche zwischen der Anschlagsfläche am Achsbolzen und dem sich abstützenden Kegelrad geschaffen, andererseits wird durch die lagerichtige Zuordnung von Achsbolzen und Käfig ein Verschieben desselben verhindert, so daß beim Zusammenbau kein zusätzlicher Positionieraufwand erforderlich ist.

Der Zusammenbau des Differentials wird weiter erleichtert, wenn sich am Gehäuse jeweils eine Zentrierhülse abstützt, die durch den Käfig ragt und diesen und das Ausgleichskegelrad lagerichtig zentriert. Damit wird einerseits ein Verdrehen des Käfigs vermieden, und andererseits kann eine Zwischenbaueinheit geschaffen werden, die nach Einbau in das Gehäuse bereits lagerichtig und verdrehsicher angeordnet ist und somit den Einbau der Achswellen erleichtert.

Durch Anordnung einer Gleitkalotte zwischen Käfig und Achswellenrädern läßt sich deren Laufverhalten durch Reibungsminderung verbessern. Gleichzeitig ergibt sich eine verbesserte, flächige Abstützung der Achswellenräder am Käfig.

Die Erfindung wird anhand der nachfolgenden Beschreibung und Zeichnung beispielhaft näher erläutert.

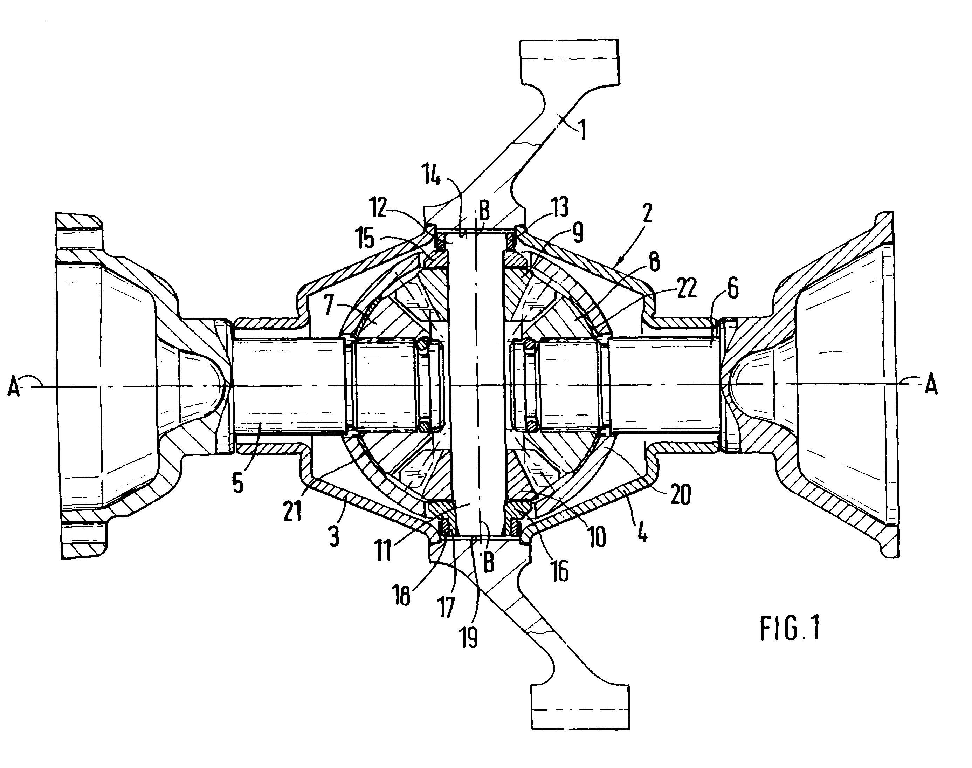

Es zeigen
- Fig. 1: einen Schnitt durch ein Differential,
- Fig. 2: einen nur teilweise dargestellten Schnitt durch eine abgewandelte Form des Differentials,
- Fig. 3 a-d: eine erste Variante eines Käfigs,
- Fig. 4 a-d: eine zweite Variante des Käfigs und
- Fig. 5 a-d: eine dritte Variante des Käfigs.

Ein Differential für den Achsantrieb eines Kraftfahrzeuges weist ein Antriebsrad 1 auf, das mit einem Ausgleichsgehäuse 2 fest verbunden ist. Das Ausgleichsgehäuse 2 besteht aus zwei Töpfen 3 und 4, die rotationssymmetrisch zu einer Achse A-A ausgebildet sind und identisch sein können. In das Ausgleichsgehäuse 2 ragen die freien Endabschnitte zweiter einander gegenüberliegender Achsantriebswellen 5 und 6, deren Längsachsen auf der Rotationsachse A-A liegen. Auf den im Ausgleichsgehäuse befindlichen freien Enden der Achsantriebswellen 5 und 6 ist jeweils drehfest aber axial verschieblich ein Achswellenrad 7, 8 gelagert. Diese Achswellenräder 7 und 8 sind als Kegelzahnräder ausgebildet und kämmen mit zwei einander gegenüberliegenden ebenfalls als Kegelzahnräder ausgebildeten Ausgleichsrädern 9 und 10. Diese Ausgleichsräder 9 und 10 sind auf einem Achsbolzen 11 gelagert, dessen Längsachse B-B etwa senkrecht zur Rotationsachse A-A verläuft. Der Achsbolzen 11 hat an seiner Oberseite einen Flansch 12 größeren Durchmessers, der von einem Führungselement 13 umfaßt wird, das mit Spiel in einer zwischen den beiden Töpfen 3 und 4 und dem Antriebsrad 1 gebildeten Ausnehmung 14 geführt ist. Am Flansch 12 des Achsbolzens 11 liegt ein Stützring 15 an, an dem sich das Ausgleichsrad 9 abstützt. Das gegenüberliegende Ausgleichsrad 10 liegt an einem zweiten Stützring 16 an, der mit dem freien Ende des Achsbolzens 11 verschweißt ist. Dieser Stützring 16 wird an einem kragenförmigen Fortsatz 17 von einem Führungselement 18 umfaßt, das mit Spiel in einer Ausnehmung 19 zwischen den beiden Töpfen 3 und 4 des Ausgleichsgehäuses 2 und dem Antriebsrad 1 geführt ist. Die Ausnehmungen 14 und 19 bzw. die Führungselemente 13 und 18 sind jeweils so gestaltet, daß der Achsbolzen 11 in Richtung der Rotationsachse A-A und der Längsachse B-B geringfügig verschiebbar ist.

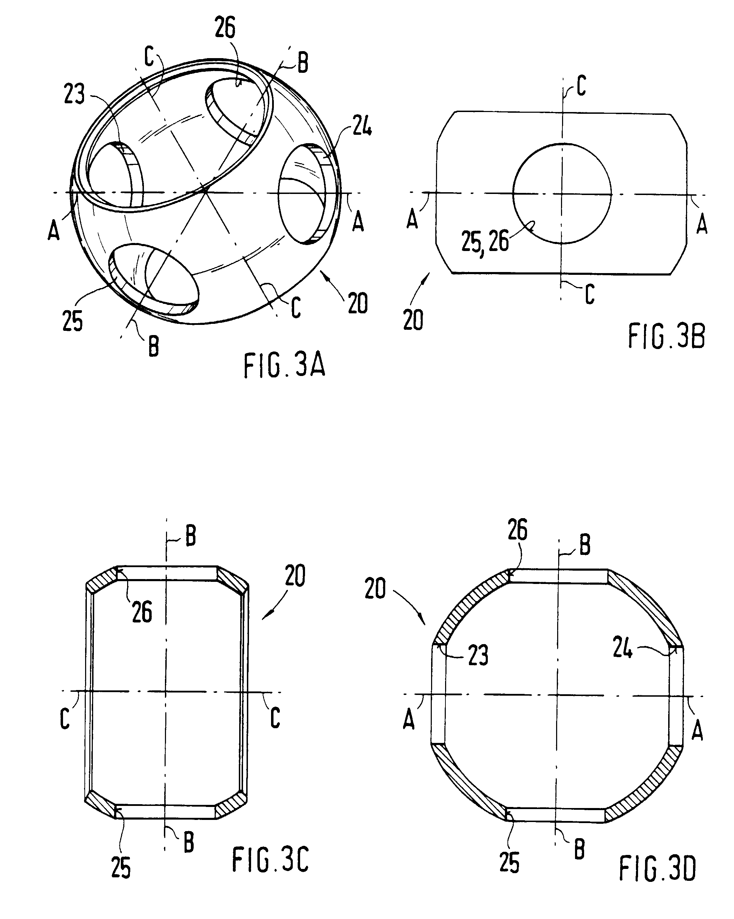

Die Achswellenräder 7 und 8 und Teile der Ausgleichsräder 9 und 10 werden von einem Käfig 20 umfaßt, wie er beispielsweise in den Fig. 3 a bis 3 d dargestellt ist. Die Achswellenräder 7 und 8 stützen sich aufgrund der im Betrieb des Differentials auftretenden Kräfte in Richtung der Rotationsachse A-A am Käfig 20 ab. Zur besseren Anlage und zur Verminderung der Reibung ist zwischen den Achswellenräder 7 und 8 und dem Käfig 20 jeweils eine Gleitkalotte 21, 22 angeordnet, die am Käfig 20 befestigt ist.

Der in den Fig. 3 a bis 3 d näher dargestellte Käfig 20 besteht aus einem Rohrabschnitt, dessen Längsachse in diesem Ausführungsbeispiel auf einer Achse C-C senkrecht zur Rotationsachse A-A bzw. Längsachse B-B des Achsbolzens liegt. Die Mantelfläche des Rohrabschnittes ist durch spanloses Umformen, beispielsweise Einrollen oder Aufweiten, in eine Kugelform gebracht. Der Käfig 20 wird von vier Bohrungen 23 bis 26 durchdrungen, von denen sich jeweils die Bohrungen 23 und 24 bzw. 25 und 26 paarweise gegenüberliegen. Die beiden Bohrungen 23 und 24 liegen dabei auf der Rotationsachse A-A und dienen zur Durchführung der freien Enden der Achsantriebswellen 5 bzw. 6. Die rechtwinklig dazu angeordneten Bohrungen 25 und 26 liegen jeweils auf der Längsachse B-B und dienen zur Aufnahme bzw. Durchführung des Achsbolzens 11.

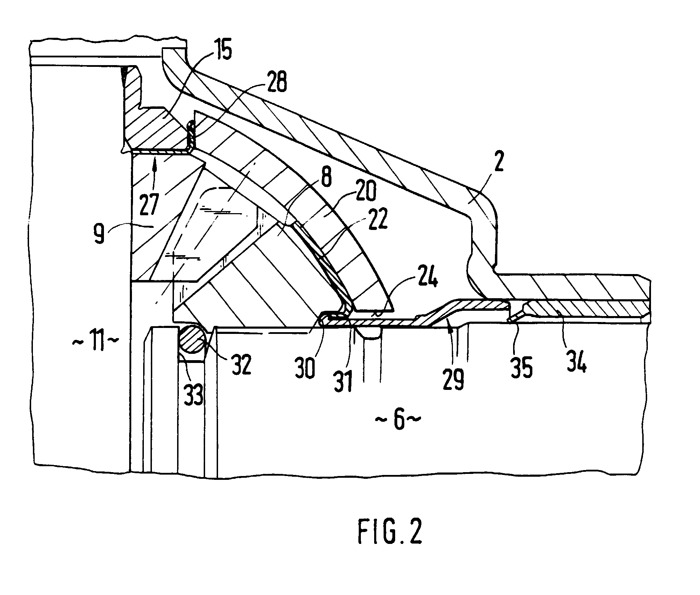

In einer Abwandlung des Differentials, wie sie in Fig. 2 dargestellt ist, ist zwischen den Ausgleichsrädern, von denen hier nur das Ausgleichsrad 9 dargestellt ist, und den zugeordneten Stützringen 15 bzw. 16 ein Führungsring 27 angeordnet, dessen Ringfläche als Lauffläche zwischen Ausgleichsrad und Stützring dient. Dieser Führungsring 27 umfaßt den Achsbolzen 11 und liegt an diesem an. Von seinem Außenumfang gehen mehrere abgewinkelte Federarme 28 aus, die einerseits an der Wandung der Bohrung 25 bzw. 26 des Käfigs 20 und andererseits am Stützring 15 bzw. 16 anliegen. Dieser Führungsring 27 kann beispielsweise aus Kunststoff gefertigt sein und dient einmal als Lauffläche zwischen Ausgleichsrad und Stützring und andererseits als Führungs- bzw. Zentrierelement, mit dem der Achsbolzen 11 und der Käfig 20 bei der Montage in eine lagerichtige Zuordnung gebracht und gehalten werden.

Durch die Bohrungen 23 bzw. 24 ragt eine Zentrierhülse 29, die jeweils die Achsantriebswelle 5 bzw. 6 umfaßt, und im Bereich der Wellendurchführung am Ausgleichsgehäuse 2 anliegt. Diese Zentrierhülse 29 ragt bis in das Innere des Käfigs 20 und hintergreift mit Rastnasen 30 einen zylindrischen Fortsatz 31 der Gleitkalotte 21 bzw. 22. Mit Hilfe dieser Zentrierhülse 29 läßt sich eine Montageeinheit, bestehend aus Käfig, den Ausgleichsrädern und den Achswellenrädern samt Achsbolzen vor der Montage der Achsantriebswellen 5 bzw. 6 lagerichtig im Ausgleichsgehäuse 2 zentrieren. Die Achsantriebswellen 5 bzw. 6 können dann ohne weiteren Justier- bzw. Positioniervorgang in das Ausgleichsgehäuse 2, die entsprechende Bohrung im Käfig 20 und das jeweilige Ausgleichsrad eingeschoben werden. Durch einen Sicherungsring 32, der in einer Nut 33 der Achsantriebswelle 5 bzw. 6 angeordnet ist, wird die jeweilige Achsantriebswelle gegen unbeabsichtigtes Lösen gesichert.

Um das Ausgleichsgehäuse 2 mit einer eigenen Schmiermittelfüllung versehen zu können, sind die Achsantriebswellen 5 bzw. 6 jeweils von einer Lagebuchse 34 mit geringem Spiel umfaßt. Diese sind jeweils im Ausgleichsgehäuse 2 angeordnet und weisen Dichtlippen 35 auf, die an der Achsantriebswelle 5 bzw. 6 anliegen. Damit wird ein gegen die Umgebung abgedichteter Innenraum im Ausgleichsgehäuse 2 geschaffen.

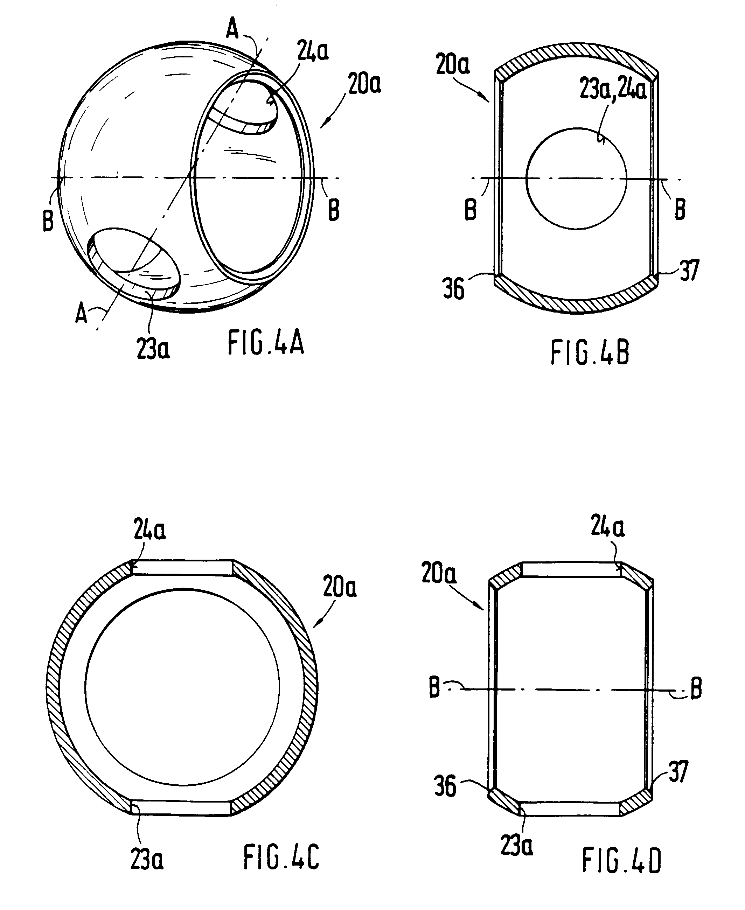

Um bei relativ gleichbleibenden Außenabmessungen und Wandstärken des Käfigs 20 höhere Antriebsleistungen bzw. Lasten abstützen zu können, kann der Käfig, wie in den Fig. 4a bis 4b dargestellt, abgewandelt werden. Der in den Fig. 4a bis 4d dargestellte Käfig 20a besteht ebenfalls aus einem zylindrischen Rohrabschnitt, dessen Mantelfläche kugelförmig aufgeweitet bzw. eingerollt ist. Im Gegensatz zum Ausführungsbeispiel zuvor entspricht die Längsachse des Käfigs 20a der Längsachse B-B. In die Mantelfläche des Käfigs 20a sind zwei diametrale Bohrungen 23a, 24a eingebracht, die jeweils auf der Rotationsachse A-A liegen und zur Aufnahme bzw. Durchführung der Achsantriebswellen 5 bzw. 6 dienen. Der Einbau des Käfigs in das Ausgleichsgehäuse 2 erfolgt so, daß dieser Käfig 20a gegenüber dem zuvor dargestellten um 90° verdreht eingebaut wird, so daß der Achsbolzen 11 durch die Rohröffnungen 36 bzw. 37 ragt. Durch diese Ausbildung und Anordnung des Käfigs 20a wird die Mantelfläche nur von zwei diametralen Bohrungen durchdrungen und so weniger geschwächt. Damit ist bei gleichen Außenabmessungen und gleicher Wandstärke eine höhere Lastaufnahme möglich. Um beim Käfig 20a eine Verdrehsicherung gemäß Fig. 2 zu gewährleisten, wird der Führungsring 27 so abgewandelt, daß zumindestens ein Teil der Führungsarme 28 länger ausgebildet wird und so abgewinkelt ist, daß diese am bzw. in der Rohröffnung 36 bzw. 37 anliegen und somit den Käfig 20a lagerichtig führen und zentrieren.

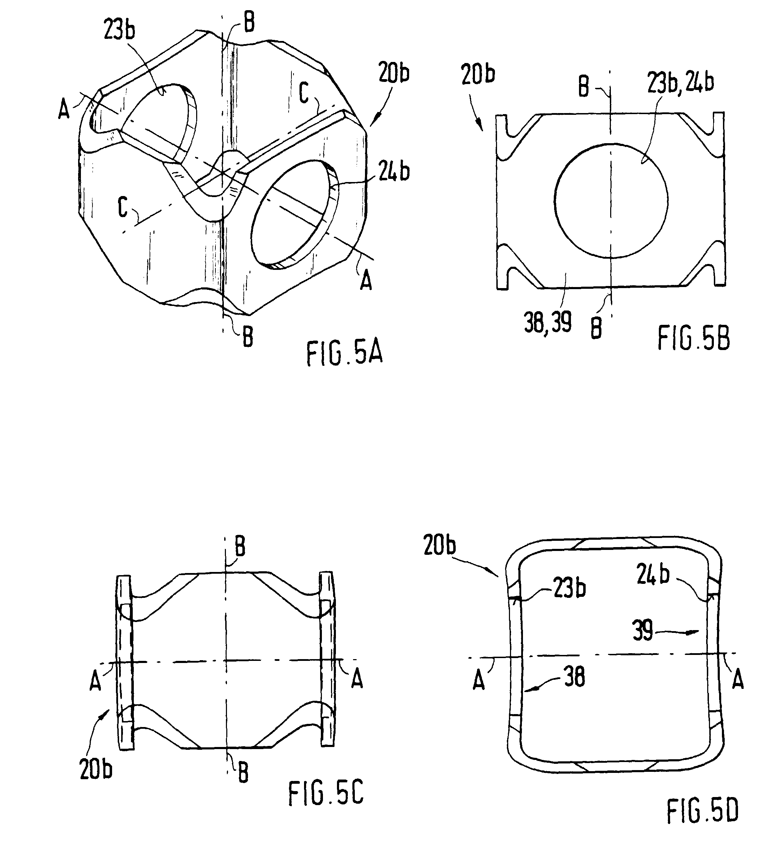

Der in den Fig. 5a bis 5d dargestellte Käfig 20b unterscheidet sich von den beiden zuvor beschriebenen in erster Linie durch das geänderte Rohrprofil bzw. durch den geänderten Rohrquerschnitt. Der Käfig 20b besteht aus einem Rohrabschnitt mit nahezu quadratischem Querschnitt. Ein derartiger Rohrabschnitt bzw. ein derartiges Profilrohr ist beispielsweise als Strangpreßprofil auszubilden und herzustellen. Um Spannungspitzen während des Betriebes zu vermeiden, sind die Ecken des Rohrprofiles abgerundet. Um eine kleine Baugröße des Ausgleichsgehäuses 2 zu ermöglichen, können die Kanten bzw. Ecken gebrochen bzw. abgeschrägt werden. Die Wandstärken des Rohres sind nicht gleichmäßig, sondern in Anpassung an die während des Betriebes auftretende Belastung kontinuierlich ab- bzw. zunehmend ausgeführt. Der Käfig 20b wird, wie der Käfig 20a, von zwei diametralen Bohrungen 23b, 24b durchdrungen. Diese beiden Bohrungen dienen zur Aufnahme bzw. Durchführung der Achsantriebswellen 5 bzw. 6. Die Durchführung und Aufnahme des Achsbolzens 11 erfolgt wie beim Käfig 20a durch die Rohröffnungen 36 bzw. 37. Die Anordnung des Käfigs 20b im Ausgleichsgehäuse 2 erfolgt analog zum zuvor beschriebenen Ausführungsbeispiel. Die beiden gegenüberliegenden Wandungen 38 bzw. 39 mit den Bohrungen 23b und 24b sind nach innen gewölbt. Durch diese Wölbungen der Wandung nach innen wird im Betrieb ein gewisser Federungseffekt bewirkt, das Trag- bzw. Laufverhalten der Achsantriebsräder wird verbessert und gleichzeitig wird bei geringen, vom Käfig aufzunehmenden Stützkräften ein umlaufender Schmierkeil gebildet.

## Patentansprüche

1. Differential für den Achsantrieb eines Kraftfahrzeuges, mit einem ein Antriebsrad (1) tragenden Ausgleichsgehäuse (2), in welchem ein Ausgleichsräder (9,10) tragender Achsbolzen (11) gelagert ist und diese Ausgleichsräder mit auf Achsantriebswellen (5,6) angeordneten Achswellenrädern (7,8) kämmen, und diese Achswellenräder als Kegelräder ausgebildet sind, wobei die Achswellenräder in einem die in Richtung der Achsantriebswellen wirkenden Kräfte aufnehmenden Käfig (20,20a,20b) gelagert sind, **dadurch gekennzeichnet,** daß der Käfig (20, 20 a, 20 b), aus einem Rohrabschnitt gefertigt ist, dessen Wandung mindestens zwei diametrale Bohrungen (23, 23a, 23b; 24, 24a, 24b) zur Durchführung der Achsantriebswellen (5, 6) aufweist.

2. Differential nach Anspruch 1, **dadurch gekennzeichnet**, daß der Käfig (20, 20a) aus einem zylindrischen Rohrabschnitt besteht, der durch einen Umformvorgang in eine kugelige Form gebracht ist.

3. Differential nach Anspruch 1 oder 2, **dadurch gekennzeichnet**, daß der Käfig (20) zwei weitere diametrale Bohrungen (25, 26) zur Aufnahme des Achsbolzens (11) aufweist.

4. Differential nach Anspruch 1, **dadurch gekennzeichnet**, daß der Käfig (20b) aus einem Rohrabschnitt mit Rechteckprofil und gerundeten Ecken besteht und beanspruchungsspezifisch angepasste Wandstärken aufweist.

5. Differential nach Anspruch 4, **dadurch gekennzeichnet**, daß die Wandungen (38, 39) des Käfigs (20b) mit den Bohrungen (23b, 24b) zur Aufnahme der Achsantriebswellen (5, 6) im Einbauzustand nach innen vorgewölbt sind.

6. Differential nach einem der Ansprüche 1 bis 5, **dadurch gekennzeichnet**, daß der Achsbolzen (11) von jeweils einem Führungsring (27) umfaßt wird, der zwischen dem Ausgleichsrad (9, 10) und einer Stützfläche (15, 16) angeordnet ist, und der Führungsarme (28) aufweist, die am Käfig (20, 20a, 20b) angreifen und diesen und den Achsbolzen (11) relativ zueinander führen.

7. Differential nach einem der Ansprüche 1 bis 6, **dadurch gekennzeichnet,** daß im Inneren des Käfigs (20, 20a, 20b) eine Gleitkalotte (21, 22) angeordnet ist, an der das Ausgleichsrad (9, 10) gleitend abgestützt wird.

8. Differential nach einem der Ansprüche 1 bis 7, **dadurch gekennzeichnet,** daß sich im Ausgleichsgehäuse (2) jeweils eine Zentrierhülse (29) abstützt, die durch den Käfig (20, 20a, 20b) ragt und diesen und das Achswellenrad (7, 8) lagerichtig zentriert.

9. Differential nach Anspruch 8, dadurch gekennzeichnet, daß die Zentrierhülse (29) im Inneren des Käfigs (20, 20a, 20b) mit Rastmitteln (30) verhakt ist.

## Claims

1. A differential for the axle drive of a motor vehicle, with a differential housing (2) which supports a driving wheel (1) and in which an axle bolt (11) supporting differential gears (9, 10) is mounted, and the said differential gears mesh with axle-shaft gears (7, 8) mounted on axle-drive shafts (5, 6), and the said axle-shaft gears are constructed as bevel gears, wherein the axle-shaft gears are mounted in a cage (20, 20a, 20b) which absorbs forces acting in the direction of the axle-drive shafts, **characterized in that** the cage (20, 20a, 20b) is produced from a tube portion, the wall of which has at least two diametrical bores (23, 23a, 23b; 24, 24a, 24b) for the passage of the axle-drive shafts (5, 6).

2. A differential according to Claim 1, **characterized in that** the cage (20, 20a) comprises a cylindrical tube portion made into a spherical shape by a shaping process.

3. A differential according to Claim 1 or 2, **characterized in that** the cage (20) has two further diametrical bores (25, 26) for receiving the axle bolt (11).

4. A differential according to Claim 1, **characterized in that** the cage (20b) comprises a tube portion with a rectangular profile and rounded corners and has wall thicknesses adapted specifically for stresses.

5. A differential according to Claim 4, **characterized in that** the walls (38, 39) of the cage (20b) with the bores (23b, 24b) for receiving the axle-drive shafts (5, 6) protrude inwards in the assembled state.

6. A differential according to one of Claims 1 to 5, **characterized in that** the axle bolt (11) is surrounded by a respective guide ring (27), which is arranged between the differential gear (9, 10) and a support face (15, 16), and which comprises guide arms (28) engaging the cage (20, 20a, 20b) and guiding the said cage and the axle bolt (11) relative to each other.

7. A differential according to one of Claims 1 to 6, **characterized in that** a sliding cup (21, 22), on which the differential gear (9, 10) is supported in a sliding manner, is arranged in the interior of the cage (20, 20a, 20b).

8. A differential according to one of Claims 1 to 7, **characterized in that** a respective centring sleeve (29), projecting through the cage (20, 20a, 20b) and centring it and the axle-shaft gear (7, 8) in the correct position, is supported in each case in the differential housing (2).

9. A differential according to Claim 8, **characterized in that** the centring sleeve (29) is interlocked in the interior of the cage (20, 20a, 20b) by catches (30).

## Revendications

1. Différentiel pour l'entraînement d'essieu d'un véhicule automobile, comportant un boîtier de différentiel (2) portant une roue d'entraînement (1), dans lequel est monté un axe d'essieu (11) portant des pignons de compensation (9, 10) et ces pignons de compepnsation engrènent avec des pignons d'arbre d'essieu (7, 8) placés sur des arbres d'entraînement d'essieu (5, 6) et ces pignons d'arbre d'essieu sont conformés en pignons coniques, les pignons d'arbre d'essieu étant montés dans une cage (20, 20a, 20b) absorbant les forces agissant dans la direction des arbres d'entraînement d'essieu, caractérisé en ce que la cage (20, 20a, 20b) est réalisée dans une portion de tube, dont la paroi présente au moins deux perçages (23, 23a, 23b ; 24, 24a, 24b) diamétraux pour le passage des arbres d'entraînement d'essieu.

2. Différentiel selon la revendication 1, caractérisé en ce que la cage (20, 20a) est faite d'une portion de tube cylindrique, qui est amenée dans une forme sphérique par une opération de déformation.

3. Différentiel selon la revendication 1 ou 2, caractérisé en ce que la cage (20) présente deux perçages (25, 26) diamétraux destinés à recevoir l'axe d'essieu (11).

4. Différentiel selon la revendication 1, caractérisé en ce que la cage (20b) est faite d'une portion de tube de profil rectangulaire et aux angles arrondis et présente des épaisseurs de paroi adaptées spécifiquement aux sollicitations.

5. Différentiel selon la revendication 4, caractérisé en ce que les parois (38, 39) de la cage (20b) avec les perçages (23b, 24b) destinés à recevoir les arbres d'entraînement d'essieu (5, 6), sont précintrées vers l'intérieur à l'état monté.

6. Différentiel selon l'une des revendications 1 à 5, caractérisé en ce que l'axe d'essieu (11) est entouré par une bague de guidage (27), qui est placée entre le pignon de compensation (9, 10) et une surface d'appui (15, 16), et qui comporte des bras de guidage (28), qui agissent sur la cage (20, 20a, 20b) et guident celle-ci et l'axe d'essieu (11) l'une par rapport à l'autre.

7. Différentiel selon l'une des revendications 1 à 6, caractérisé en ce qu'à l'intérieur de la cage (20, 20a, 20b) est placée une calotte de glissement (21, 22), contre laquelle la roue de compensation (9, 10) est soutenue en glissement.

8. Différentiel selon l'une des revendications 1 à 7, caractérisé en ce que dans le boîtier de différentiel (2) prend appui une douille de centrage (29), qui traverse la cage (20, 20a, 20b) et centre celle-ci et la roue d'arbre d'essieu (7, 8) dans une position correcte.

9. Différentiel selon la revendication 8, caractérisé en ce que la douille de centrage (29) est accrochée à l'intérieur de la cage (20, 20a, 20b) avec des moyens d'encliquetage (30).
